# EUROPEAN PATENT APPLICATION

(11) **EP 4 822 597 A1**
(43) Date of publication of application: **14.10.2026**
(21) Application number: 26171638.5
(22) Date of filing: 10.04.2026
(51) Int. Cl.: G06N 3/045, G06N 3/09, G06N 3/092

(54) **METHOD, APPARATUS, DEVICE FOR INFORMATION PROCESSING AND STORAGE MEDIUM**

(30) Priority: 11.04.2025 CN 202510458882
(71) Applicant: Beijing Zitiao Network Technology Co., Ltd., Beijing 100190 (CN); Bytedance Technology Ltd., KY1 - 1205 Grand Cayman Cayman Islands (KY)
(72) Inventor: Feng, Jiazhan, Beijing, 100028 (CN); Huang, Shijue, Beijing, 100028 (CN); Qu, Xingwei, London, EC2Y 5EB (GB); Zhang, Ge, Beijing, 100028 (CN); Qin, Yujia, Beijing, 100028 (CN); Zhong, Baoquan, Beijing, 100028 (CN); Jiang, Chengquan, Los Angeles, 90066 (US); Chi, Jinxin, Beijing, 100028 (CN); Zhong, Wanjun, Beijing, 100028 (CN)
(74) Representative: Marks & Clerk LLP

(57) **Abstract**

According to the embodiments of the disclosure, a method, apparatus, device and memory medium for information processing are provided. The method includes: receiving a processing request, the processing request indicating a problem to be solved; and providing response content generated by a model based on the processing request, the response content including an output answer to the problem and a plurality of parts corresponding to a plurality of steps of solving the problem, where the plurality of parts include at least a first part corresponding to natural language content and a second part corresponding to source code content, and the output answer is generated based on an execution result of the source code content in a pre-configured operating environment.

## Description

### FIELD

Example embodiments of the present disclosure generally relate to the field of computers, and in particular, to a method, apparatus, device for information processing and storage medium.

### BACKGROUND

With the development of computer technologies, some language models may apply a chain of thought (CoT) technique to perform complex reasoning. A core idea of the chain of thought is to enable a model to show a reasoning process step by step like humans, instead of directly outputting a final answer. By explicitly generating intermediate reasoning steps, the model may more accurately solve problems that require multi-step logical derivation. However, the application of the chain of thought restricts the ability of the model to handle precise tasks.

### SUMMARY

In a first aspect of the present disclosure, a method of information processing is provided. The method includes: receiving a processing request, the processing request indicating a problem to be solved; and providing response content generated by a model based on the processing request, the response content comprising an output answer to the problem and a plurality of parts corresponding to a plurality of steps of solving the problem, wherein the plurality of parts comprise at least a first part corresponding to natural language content and a second part corresponding to source code content, and the output answer is generated based on an execution result of the source code content in a pre-configured operating environment.

In a second aspect of the present disclosure, an apparatus for information processing is provided. The apparatus includes: a receiving module configured to receive a processing request, the processing request indicating a problem to be solved; and a providing module configured to provide response content generated by a model based on the processing request, the response content comprising an output answer to the problem and a plurality of parts corresponding to a plurality of steps of solving the problem, wherein the plurality of parts comprise at least a first part corresponding to natural language content and a second part corresponding to source code content, and the output answer is generated based on an execution result of the source code content in a pre-configured operating environment.

In a third aspect of the present disclosure, an electronic device is provided. The device includes at least one processing unit; and at least one memory, the at least one memory being coupled to the at least one processing unit and storing instructions executable by the at least one processing unit, the instructions, when executed by the at least one processing unit, causing the device to perform the method of the first aspect.

In a fourth aspect of the present disclosure, a computer-readable storage medium is provided. The computer-readable storage medium has a computer program stored thereon, the computer program being executable by a processor to implement the method of the first aspect.

In a fifth aspect of the present disclosure, a computer program product is provided. The computer program product includes computer-executable instructions which, when executed by a processor, implement the method according to the first aspect of the present disclosure.

It would be appreciated that the content described in the Summary section of the present disclosure is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages, and aspects of the embodiments of the present disclosure will become more apparent in combination with the drawings and with reference to the following detailed description. In the drawings, the same or similar reference symbols refer to the same or similar embedded elements, where:
Fig. 1 illustrates a schematic diagram of an example environment in which the embodiments of the present disclosure may be implemented;
Fig. 2 illustrates a first flowchart of a process of information processing according to some embodiments of the present disclosure;
Fig. 3 illustrates a second flowchart of a process of information processing according to some embodiments of the present disclosure;
Fig. 4 illustrates a schematic structural block diagram of an apparatus for information processing according to some embodiments of the present disclosure; and
Fig. 5 illustrates a block diagram of an electronic device capable of implementing multiple embodiments of the present disclosure.

### DETAILED DESCRIPTION

The embodiments of the present disclosure will be described in more detail below with reference to the drawings. Although some embodiments of the present disclosure are shown in the drawings, it would be appreciated that the present disclosure may be implemented in various forms and should not be construed as limited to the embodiments set forth herein. Instead, these embodiments are provided for a more thorough and complete understanding of the present disclosure. It would be appreciated that the drawings and embodiments of the present disclosure are only used for illustrative purposes, and are not used to limit the protection scope of the present disclosure.

It would be noted that the titles of any section/subsection provided herein are not restrictive. Various embodiments are described throughout this article, and any type of embodiment may be included under any section/subsection. In addition, the embodiments described in any section/subsection may be combined with any other embodiments described in the same section/subsection and/or different section/subsection in any manner.

In the description of the embodiments of the present disclosure, the term "include/comprise" and similar terms thereof should be understood as open-ended inclusions, that is, "include/comprise but not limited to". The term "based on" should be understood as "based at least partially on". The term "one embodiment" or "the embodiment" should be understood as "at least one embodiment". The term "some embodiments" should be understood as "at least some embodiments". The following may also include other explicit and implicit definitions. The terms "first", "second", etc. may refer to different or same objects. The following may also include other explicit and implicit definitions.

The embodiments of the present disclosure may involve user data, data acquisition, and/or data use, etc. All these aspects comply with corresponding laws, regulations, and related provisions. In the embodiments of the present disclosure, all data collection, acquisition, processing, machining, forwarding, and use, etc., are carried out on the premise that the user is aware of and confirms. Accordingly, when implementing the embodiments of the present disclosure, the user should be informed of and authorize the data or the type of data, the scope of use, the use scenarios, etc., which may be involved, through appropriate means according to relevant laws and regulations. The specific manners of informing and/or authorizing may vary according to actual situations and application scenarios, and the scope of the present disclosure is not limited in this regard.

If the schemes in the specification and the embodiments involve personal information processing, the processing will be carried out on the premise that there is a legal basis (for example, the consent of the personal data subject is obtained, or it is necessary for the performance of a contract, etc.), and will only be carried out within the scope of regulations or agreements. If the user refuses to process personal data other than the necessary data required for the basic functions, it will not affect the use of the user of the basic functions.

In language models, a chain of thought (CoT) technique is generally applied for complex reasoning, for example, to solve mathematical application problems or logical problems through step-by-step derivation in natural language. However, this method completely relies on natural language as an expression form for intermediate reasoning, thus limiting the ability of the model to handle precise tasks. In addition, language models may also apply a program of thought (PoT) for reasoning. The program of thought is a technique that enables a model to solve problems by generating executable program code. The program of thought uses the precision of programming languages to transform complex computation or logical problems into code, and obtains accurate results by executing the code, thereby avoiding errors of language models in pure mathematical or symbolic reasoning. However, the program of thought usually lacks a generalized reasoning structure, resulting in low interpretability.

An embodiment of the disclosure proposes a solution to information processing. According to this solution, a processing request is received, the processing request indicating a problem to be solved; and response content generated by a model based on the processing request is provided, the response content including an output answer to the problem and a plurality of parts corresponding to a plurality of steps of solving the problem, where the plurality of parts include at least a first part corresponding to natural language content and a second part corresponding to source code content, and the output answer is generated based on an execution result of the source code content in a pre-configured operating environment.

The model in the embodiments of the present disclosure may generate executable source code in a process of solving a problem through a plurality of steps, and execute the source code to complete an intermediate reasoning task, thereby improving the ability of the model to handle precise tasks. Based on this approach, the embodiments of the present disclosure may combine the interpretability of the chain of thought with the computational precision of the program of thought, thereby improving the performance of the model in processing problems.

### Example Environment

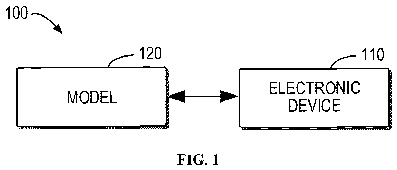

Fig. 1 illustrates a schematic diagram of an example environment 100 in which the embodiments of the present disclosure may be implemented. As shown in Fig. 1, the example environment 100 may include an electronic device 110. In some embodiments, the electronic device 110 may receive a processing request, the processing request indicating a problem to be solved; and provide response content generated by a model based on the processing request, the response content including an output answer to the problem and a plurality of parts corresponding to a plurality of steps of solving the problem, where the plurality of parts include at least a first part corresponding to natural language content and a second part corresponding to source code content, and the output answer is generated based on an execution result of the source code content in a pre-configured operating environment. The model 120 may be deployed on the electronic device 110 or on other devices, which will not be described in detail here.

In some embodiments, the electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a gaming device, or any combination of the foregoing, including the accessories and peripherals of these devices or any combination thereof. In some embodiments, the electronic device 110 may also support any type of interface for a target user (such as "wearable" circuitry, etc.).

The electronic device 110 may also be an independent physical server, a server cluster or a distributed system composed of a plurality of physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The electronic device 110 may include, for example, a computing system/server, such as a mainframe, an edge computing node, a computing device in a cloud environment, and so on.

It would be appreciated that the structure and function of each embedded element in the environment 100 are described for purposes of example only, without suggesting any limitation to the scope of the present disclosure.

Some example embodiments of the present disclosure will be described below with continued reference to the drawings.

### Example Process

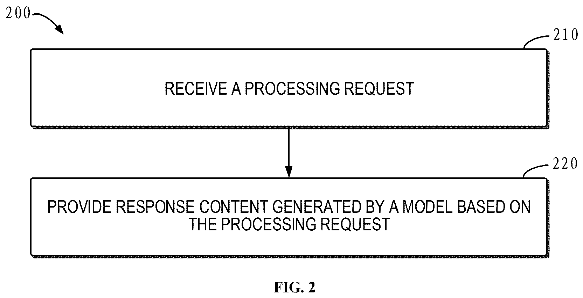

Fig. 2 illustrates a flowchart of a process 200 of information processing according to some embodiments of the present disclosure. The process 200 may be implemented at the electronic device 110. The process 200 is described below with reference to Fig. 1.

At block 210, the electronic device 110 may receive a processing request.

In some embodiments, the processing request indicates a problem to be solved. For example, the processing request may include "calculate 13 × 15".

At block 220, the electronic device 110 may provide response content generated by a model based on the processing request.

In the embodiments of the present disclosure, in order to improve the performance of the model, a code interpreter-chain of thought (CI-CoT) technique may be constructed by combining the chain of thought and the program of thought. The code interpreter-chain of thought technique is a hybrid enhancement technique, which may have both the interpretability of natural language reasoning and the computational precision of program code execution. The application of the code interpreter-chain of thought technique may generate executable code through step-by-step reasoning, and dynamically verify results using a code interpreter, thereby improving the accuracy of the model in mathematical computation, symbolic reasoning, and structured tasks.

In some embodiments, in order to enable the model to automatically combine reasoning with executable code, a modular and step-by-step system deployment solution may be applied, and the specific design is implemented through a plugin mechanism. The response content generated by the model includes an output answer to the problem and a plurality of parts corresponding to a plurality of steps of solving the problem, and there is a one-to-one correspondence between the plurality of steps and the plurality of parts. The plurality of parts include at least a first part corresponding to natural language content and a second part corresponding to source code content, and the output answer is generated based on an execution result of the source code content in a pre-configured operating environment.

In some embodiments, the plurality of steps are a plurality of forward reasoning steps for solving the problem. A forward reasoning step refers to a single reasoning unit that, in a process of problem solving, starts from known input data or intermediate results and gradually derives new intermediate results or final conclusions according to predefined rules, model structures or logical relationships. Each forward reasoning step is an independent logical unit, and its output serves as input of a next step until a final goal is reached. Moreover, the plurality of forward reasoning steps do not include a verification step.

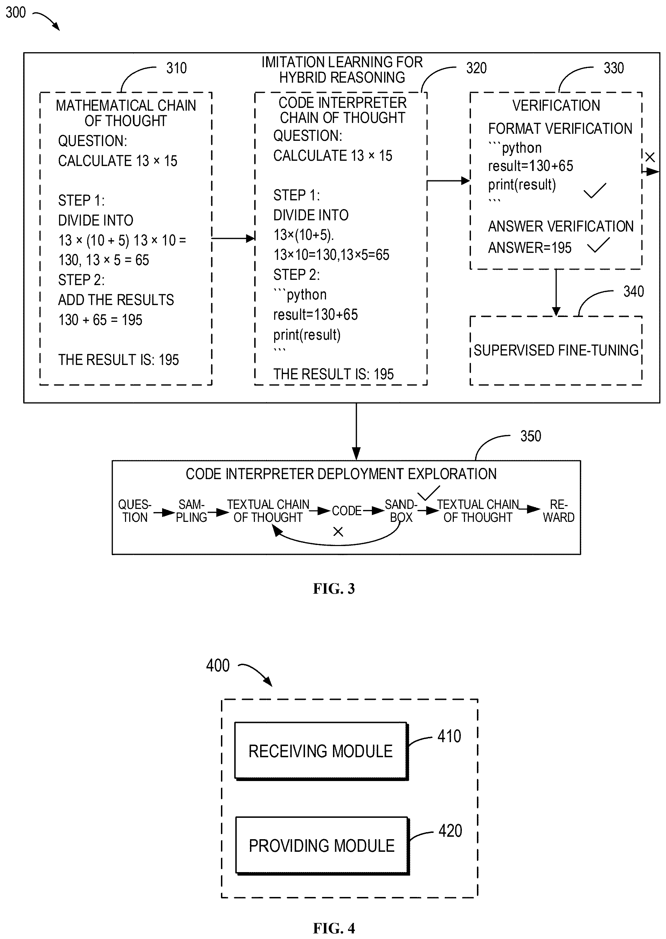

For example, the processing request includes "calculate 13 × 15", and referring to block 310 in Fig. 3, the mathematical logic for solving the problem is as follows:
The first step is:
   Divide into 13 × (10 + 5).$13 \times 10 = 130 , 13 \times 5 = 65$
The second step is:
   Add the results.$130 + 65 = 195$

In the embodiments of the present disclosure, in order to improve the accuracy of the model output, the source code content is applied to perform the calculation in the second step. Referring to block 320 in Fig. 3, the reasoning logic for solving the problem by applying a plurality of steps may be as follows:
The first step is:
   Divide into 13 × (10 + 5).$13 \times 10 = 130 , 13 \times 5 = 65$
The second step is:
   ‴ python result=130+65 print(result) ‴

The content included in the first step is the first part corresponding to the natural language content, and the content included in the second step is the second part corresponding to the source code content. Next, the code may be run in the pre-configured operating environment, and the execution result is obtained and fed back to the model, so that the model may perform self-learning and self-correction based on the feedback result.

In some embodiments, when a code termination trigger tag <code></code> is detected, the model continues to generate content until an end-of-sequence (EOS) tag is encountered. In this way, it may be ensured that the model may completely output the code when generating the code segment, and at the same time, the generation process is explicitly ended by using the end-of-sequence tag.

In some embodiments, the model also has a self-correction function, and the electronic device 110 may generate, by the model, first source code content corresponding to a target step. Then, in response to an execution error of the first source code content in the operating environment, indication information of the execution error of the first source code content is provided to the model. Next, second source code corresponding to the target step is re-generated by the model, where the second part includes the first source code content and the second source code content.

For example, the model may generate the first source code content corresponding to the target step, and then run the first source code content in the pre-configured operating environment. If the first source code content has an execution error in the operating environment, the indication information of the execution error of the first source code content may be fed back to the model. The model may learn, from the indication information, that the previously generated first source code content has an error and needs to be corrected, and then the model may re-generate the second source code corresponding to the target step. In addition, the process of automatically correcting the code by the model may be observed on the user side. For example, the user side may see a process of generating a piece of code, then reporting an error, and then generating another piece of code.

In this way, the model may be enabled to have the capabilities of error detection and self-correction, so that the model may identify defects in its own reasoning process and continuously iterate and improve its method in the process of solving complex problems. Moreover, such dynamic feedback mechanism greatly enhances the stability of the reinforcement learning training process.

In some embodiments, the electronic device 110 may obtain streaming content generated by the model based on the processing request. Then, in response to detecting a predetermined code identifier from the streaming content, the source code content is extracted from the streaming content based on the code identifier. Next, the source code content is executed in the pre-configured operating environment to obtain the execution result.

In some embodiments, the execution result is provided to the model based on the following process: providing the execution result and a predetermined result identifier to the model. For example, a regular expression may be used to extract a latest output code segment, and the code segment is sent to a remote sandbox, and the code segment is executed in the sandbox environment. After the code execution is completed, the output of the sandbox is filled into <interpreter></interpreter> tags to obtain the execution result, and then the execution result is fed back to the model, so that the model may perform self-learning and self-correction based on the feedback result. For another example, a connection to the remote sandbox for code execution may be attempted first, and if the remote connection fails, a local code interpreter is automatically switched to for processing to ensure the stability and efficiency of the execution process.

In some embodiments, in order to accelerate the model reasoning and avoid repeated computation, the electronic device 110 may save contextual information of the model in response to the source code content being executed in the operating environment. Then, the saved contextual information is updated based on the execution result of the source code for use in a subsequent processing process of the model. For example, the current context is saved during the code execution process, and the execution result returned by the sandbox is concatenated into the context in real time, and then the key-value cache of the model is updated for accelerating the subsequent reasoning.

In addition, in order to reduce the memory overhead during the execution process, every time a code termination trigger is detected, all previous key-values are cached, and the key-value caching is calculated only for the feedback of the code interpreter. This will greatly reduce the key-value cache required for each deployment.

In some embodiments, referring to block 340 in Fig. 3, imitation learning may be performed through a supervised fine-tuning method to enhance the tool integration reasoning capability. The electronic device 110 may obtain a first sample problem in a sample set. Then, the first sample problem is provided to a first model to determine whether solving the first sample problem requires generation of source code content. Next, in response to an output result of the first model indicating that solving the first sample problem requires the generation of the source code content, the sample problem is added to first sample data. Then, a first training process is performed on the model based on the first sample data.

Supervised fine-tuning (SFT) is a process of further training a model using a dataset with explicit labels or supervision signals on the basis of a pre-trained language model. This method guides the model to perform better on a specific task or field by introducing manually labeled data. Imitation learning is a method of training a model by observing expert behavior. The core idea is to enable the model to learn how to imitate the behavior of experts on a specific task, thereby obtaining performance similar to that of experts.

For example, in order to ensure the quality of samples, a strict screening process may be pre-executed using a first model, and the first model is enabled to evaluate whether solving a first sample problem requires generation of source code content, that is, evaluate the applicability of the first sample problem to tool use. If the first model determines that solving the first sample problem requires the generation of the source code content, it indicates that a tool may be applied to significantly improve the solving process of the first sample problem and improve the calculation accuracy. Then, the first sample problem is added to first sample data. Then, a first training process is performed on the model based on the first sample data.

In some embodiments, in order to improve the ability of the model to determine when it is suitable to use a computing tool, the corresponding content may also be verified. In response to the output result of the first model indicating solving the first sample problem requires the generation of the source code content, the electronic device 110 may obtain first response content generated by a second model based on the first sample problem, the first response content including a code segment. Then, in response to the first response content satisfying a predetermined condition, the first sample problem is added to the first sample data. In this way, high-quality sample data may be obtained.

In some embodiments, the predetermined condition includes at least one of the following: a code format of the code segment satisfying a predetermined specification, the code segment successfully running in the operating environment, and an answer included in the first response content being consistent with an answer indicated by the first sample data. That is, if the first model is applied to determine that solving the first sample problem requires the generation of the source code content, the second model is applied to generate the first response content based on the first sample problem. If the first response content may satisfy the above predetermined condition, it indicates that the first sample problem is a sample that meets the requirements, and it is added to the first sample data.

Specifically, two-stage verification may be performed on the response content. For example, referring to block 330 in Fig. 3, format verification may be first performed on the first response content, that is, verifying whether the format of the first response content meets the requirements. Through the format verification, the readability may be improved while ensuring the syntax consistency, so that the call trigger condition of the computing tool may be effectively detected in a subsequent reinforcement learning stage. Then, answer verification is performed on the first response content, that is, verifying whether the answer of the first response content is correct. If the verification result shows that the answer of the first response content is correct, the first sample problem is added to the first sample data. Through the two-stage verification, a reliable initialization setting may be provided for the subsequent tool-based reinforcement learning.

In some embodiments, in order to exclude unnecessary or interfering information in the loss calculation process so that the model may more effectively focus on the main task, and improve the training efficiency and final performance, the training loss of the first training process may be made independent of the execution result of the code segment. For example, because the reasoning process includes code explanations or reasoning steps generated by the code interpreter, in order to ensure that the model mainly focuses on the final code generation or problem solving task, rather than relying too much on the explanatory output, the feedback output of the code interpreter may be optionally masked in the loss calculation. This helps the model to focus more on the core tasks, thereby improving the overall performance.

In some embodiments, during the training process, predetermined prompt information may be set in advance, and the predetermined prompt information is a pre-designed framework or format used to organize and guide input data, so that the model may better understand and process the data. For example, the predetermined prompt information may include "Solve the following problem step by step. You may now optionally write executable Python code to enhance the reasoning process. The Python code will be executed in an external sandbox and its output (which will be wrapped in <interpreter>output_str</interpreter> tags) will be returned to aid reasoning and help you derive the final answer. The Python code should be a complete script, including necessary import statements.". The model may generate a corresponding response based on the predetermined prompt information.

In some embodiments, referring to block 350 in Fig. 3, the model performance may be further improved through reinforcement learning. The electronic device may perform a second training process on the model based on second sample data, the second training process being associated with reinforcement learning. Reinforcement learning is an important branch of machine learning, which focuses on how an agent takes a series of actions in an environment to maximize cumulative rewards. The agent learns using reinforcement learning by trial and error, and the agent continuously adjusts its strategy in the process of interacting with the environment to obtain better long-term returns.

In some embodiments, the electronic device 110 may provide a second sample problem in the second sample data to the model to generate second response content, the second response content including a first answer to the second sample problem. Then, reward information of the reinforcement learning is determined based on a comparison between the first answer and a second answer indicated by the second sample data, to perform the second training process. For example, during the reinforcement learning process, the reward function may be used as the main training signal to determine the optimization direction of the reinforcement learning. For a question with a definite answer, the model may be required to give the answer in a specified format, for example, placed in \box, so as to evaluate the accuracy of the answer.

In some embodiments, the reward information is also associated with whether the code segment included in the second response content successfully runs in the operating environment. For example, after each call to the sandbox, a lower reward is given as a penalty for the style output that fails to call the code based on the running state of the code segment, thereby providing a more accurate reward value for the overall training process.

In some embodiments, the neural reward model is a data-trained model used to replace the manually designed reward function. However, the neural reward model is prone to reward hacking, that is, the agent learns to exploit vulnerabilities or biases in the reward model to obtain high rewards but does not really complete the target task. Moreover, the reward mechanism is used to guide the model to learn specific behaviors in reinforcement learning. If the reward mechanism of a model is mainly based on the performance of the code interpreter, the model will tend to optimize tasks related to code interpretation. Therefore, in the embodiments of the present disclosure, the use of the neural reward model and the code interpreter feedback may be avoided to prevent the above problems. A simple reward mechanism may promote more diverse problem-solving behaviors.

In some embodiments, the reinforcement learning training process may also be accelerated through an asynchronous code sandbox. The sandbox container acts as a working node in the resource pool and may independently pull tasks based on its current capabilities, thereby constructing an efficient load balancing mechanism. Such distributed asynchronous method shortens the collection time of experience data by enabling each working node to interact with the environment in parallel, thereby accelerating the training speed of reinforcement learning. It may prevent a slow-running working node from forming a bottleneck, ensure optimal use of resources, and maintain a stable processing speed during the training process.

The embodiments of the present disclosure may first use the first model to construct high-quality samples through imitation learning to ensure detailed and verified mathematical logic. Then, reinforcement learning is applied to guide the model to use the external computing tool in an optimal manner, thereby enhancing tool integration, and a sandboxed code interpreter is adopted for immediate feedback on computational precision. This method significantly improves the ability of the model to perform complex mathematical reasoning using the tool. In addition, in order to effectively integrate mathematical logic and programming-based methods, a dedicated tool-based reinforcement learning pipeline is introduced, which enhances the ability of the model to appropriately select and apply tools during the reasoning process, thereby improving the overall performance of the model.

### Example Apparatus and Device

The embodiments of the present disclosure also provide a corresponding apparatus for implementing the above method or process. Fig. 4 illustrates a schematic structural block diagram of an apparatus 400 for information processing according to some embodiments of the present disclosure. The apparatus 400 may be implemented as or included in the electronic device 110 as discussed above. Each module/component in the apparatus 400 may be implemented by hardware, software, firmware, or any combination thereof.

As shown in Fig. 4, the apparatus 400 includes a receiving module 410 configured to receive a processing request, the processing request indicating a problem to be solved; and a providing module 420 configured to provide response content generated by a model based on the processing request, the response content comprising an output answer to the problem and a plurality of parts corresponding to a plurality of steps of solving the problem, wherein the plurality of parts comprise at least a first part corresponding to natural language content and a second part corresponding to source code content, and the output answer is generated based on an execution result of the source code content in a pre-configured operating environment.

In some embodiments, the second part is generated by: generating, by the model, first source code content corresponding to a target step; providing, in response to an execution error of the first source code content in the operating environment, indication information of the execution error of the first source code content to the model; and re-generating, by the model, second source code corresponding to the target step, wherein the second part comprises the first source code content and the second source code content.

In some embodiments, the execution result is generated by: obtaining streaming content generated by the model based on the processing request; extracting, in response to detecting a predetermined code identifier from the streaming content, the source code content from the streaming content based on the code identifier; and executing the source code content in the pre-configured operating environment to obtain the execution result.

In some embodiments, the apparatus 400 is further configured to save contextual information of the model in response to the source code content being executed in the operating environment; and update the saved contextual information based on the execution result of the source code for use in a subsequent processing process of the model.

In some embodiments, the execution result is provided to the model by: providing the execution result and a predetermined result identifier to the model.

In some embodiments, the model is trained by: obtaining a first sample problem in a sample set; providing the first sample problem to a first model to determine whether solving the first sample problem requires generation of source code content; adding, in response to an output result of the first model indicating that solving the first sample problem requires the generation of the source code content, the first sample problem to first sample data; and performing a first training process on the model based on the first sample data.

In some embodiments, adding the sample problem to the first sample data includes: obtaining, in response to the output result of the first model indicating that solving the first sample problem requires the generation of the source code content, first response content generated by a second model based on the first sample problem, the first response content comprising a code segment; and adding the first sample problem to the first sample data in response to the first response content satisfying a predetermined condition.

In some embodiments, the predetermined condition includes at least one of the following: a code format of the code segment satisfying a predetermined specification; the code segment successfully running in the operating environment; and an answer comprised in the first response content being consistent with an answer indicated by the first sample data.

In some embodiments, the training loss of the first training process is independent of the execution result of the code segment.

In some embodiments, the model is trained by: performing a second training process on the model based on second sample data, the second training process being associated with reinforcement learning.

In some embodiments, performing the second training process on the model based on the second sample data includes: providing a second sample problem in the second sample data to the model to generate second response content, the second response content including a first answer to the second sample problem; and determining reward information of the reinforcement learning based on a comparison between the first answer and a second answer indicated by the second sample data, to perform the second training process.

In some embodiments, the reward information is also associated with whether the code segment included in the second response content successfully runs in the operating environment.

In some embodiments, the plurality of steps are a plurality of forward reasoning steps for solving the problem.

The units included in the apparatus 400 may be implemented in various ways, including software, hardware, firmware, or any combination thereof. In some embodiments, one or more units may be implemented using software and/or firmware, such as machine-executable instructions stored on a storage medium. In addition to machine-executable instructions or as an alternative, some or all units in the apparatus 400 may be implemented at least partially by one or more hardware logic components. As an example, rather than a limitation, example types of hardware logic components that may be used include field programmable gate array (FPGA), application specific integrated circuit (ASIC), application specific standard (ASSP), system on chip (SOC), complex programmable logic device (CPLD), and so on.

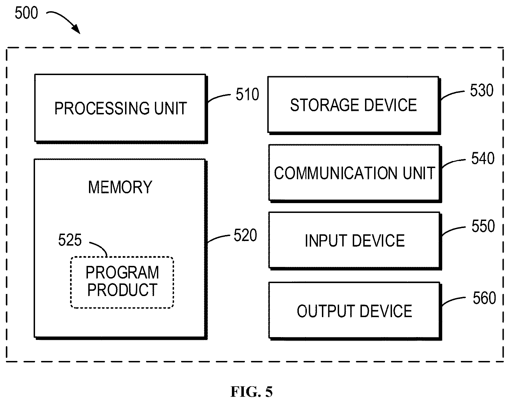

Fig. 5 illustrates a block diagram of an electronic device 500 in which one or more embodiments of the present disclosure may be implemented. It would be appreciated that the electronic device 500 shown in Fig. 5 is only example and should not constitute any limitation on the function and scope of the embodiments described herein. The electronic device 500 shown in Fig. 5 may be used to implement the electronic device 110 shown in Fig. 1.

As shown in Fig. 5, the electronic device 500 is in the form of a general electronic device. The components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and may execute various processes based on programs stored in the memory 520. In a multi-processor system, a plurality of processing units execute computer-executable instructions in parallel to improve the parallel processing capability of the electronic device 500.

The electronic device 500 typically includes a plurality of computer storage medium. Such medium may be any available medium that is accessible to the electronic device 500, including, but not limited to, volatile and non-volatile medium, removable and non-removable medium. The memory 520 may be volatile memory (for example, a register, cache, a random access memory (RAM)), a non-volatile memory (such as a read-only memory (ROM), an electrically erasable programmable read-only memory (EEPROM), a flash memory), or any combination thereof. The storage device 530 may be a removable or non-removable medium, and may include a machine-readable medium such as a flash drive, a disk, or any other medium, which may be used to store data and/or data (such as training data for training) and may be accessed within the electronic device 500.

The electronic device 500 may further include additional removable/non-removable, volatile/non-volatile memory medium. Although not shown in Fig. 5, a disk drive for reading from or writing to a removable, non-volatile disk (such as a "floppy disk"), and an optical disk drive for reading from or writing to a removable, non-volatile optical disk may be provided. In these cases, each drive may be connected to the bus (not shown) by one or more data medium interfaces. The memory 520 may include a computer program product 525 having one or more program modules configured to perform various methods or acts of the various embodiments of the present disclosure.

The communication unit 540 enables communication with other electronic devices through the communication medium. Additionally, the functions of the components of the electronic device 500 may be implemented by a single computing cluster or a plurality of computing machines, which may communicate through communication connections. Therefore, the electronic device 500 may use a logical connection with one or more other servers, a network personal computer (PC), or another network node to operate in a networked environment.

The input device 550 may be one or more input devices, such as a mouse, a keyboard, a tracking ball, etc. The output device 560 may be one or more output devices, such as a display, a speaker, a printer, etc. The electronic device 500 may also communicate with one or more external devices (not shown) such as a storage device and a display device, with one or more devices that enable a user to interact with the electronic device 500, or with any devices (such as a network card and a modem) that enable the electronic device 500 to communicate with one or more other electronic devices through the communication unit 540 as needed. Such communication may be performed via input/output (I/O) interfaces (not shown).

According to an example implementation of the present disclosure, there is provided a computer-readable storage medium having computer-executable instructions stored thereon, where the computer-executable instructions are executed by a processor to implement the method described above. According to an example implementation of the present disclosure, there is further provided a computer program product tangibly stored on a non-transitory computer-readable medium and including computer-executable instructions, where the computer-executable instructions are executed by a processor to implement the method described above.

Various aspects of the present disclosure are described herein with reference to the flowcharts and/or block diagrams of the method, apparatus, device, and computer program product implemented according to the present disclosure. It would be appreciated that each block of the flowchart and/or block diagram, and a combination of each block in the flowchart and/or block diagram may be implemented by computer-readable program instructions.

These computer-readable program instructions may be provided to a processing unit of a general-purpose computer, a special-purpose computer, or other programmable information processing apparatus to produce a machine, such that these instructions, when executed by the processing unit of the computer or other programmable information processing apparatus, produce an apparatus that implements the functions/acts specified in one or more blocks of the flowchart and/or block diagram. These computer-readable program instructions may also be stored in a computer-readable storage medium, these instructions enable the computer, the programmable information processing apparatus, and/or other devices to work in a specific manner, and thus, the computer-readable medium storing the instructions includes a manufactured product, which includes instructions for implementing various aspects of the functions/acts specified in one or more blocks of the flowchart and/or block diagram.

The computer-readable program instructions may be loaded onto a computer, other programmable information processing apparatus, or other devices, so that a series of operations and steps are performed on the computer, other programmable information processing apparatus, or other devices to produce a computer-implemented process, thereby enabling the instructions executed on the computer, other programmable information processing apparatus, or other devices to implement the functions/acts specified in one or more blocks of the flowchart and/or block diagram.

The flowchart and block diagram in the drawings show the architecture, functionality, and operation of the possible implementations of the system, method, and computer program product according to various implementations of the present disclosure. In this regard, each block in the flowchart or block diagram may represent a module, program segment, or part of an instruction, which includes one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It would also be noted that each block in the block diagram and/or flowchart, and a combination of the blocks in the block diagram and/or flowchart, may be implemented by a special-purpose hardware-based system that executes specified functions or acts, or by a combination of special-purpose hardware and computer instructions.

The implementations of the present disclosure have been described above, and the above description is for the purpose of example, non-exhaustive, and not limited to the disclosed implementations. Many modifications and variations will be apparent to those of ordinary skill in the art without departing from the scope of the described implementations. The choice of terms used herein is intended to best explain the principles of the implementations, the practical applications, or improvements to the technology in the market, or to enable other ordinary skilled persons in the art to understand the implementations disclosed herein.

## Claims

1. A method (200) for information processing, comprising:
receiving (210) a processing request, the processing request indicating a problem to be solved; and
providing (220) response content generated by a model based on the processing request, the response content comprising an output answer to the problem and a plurality of parts corresponding to a plurality of steps of solving the problem, wherein the plurality of parts comprise at least a first part corresponding to natural language content and a second part corresponding to source code content, and the output answer is generated based on an execution result of the source code content in a pre-configured operating environment.

2. The method (200) of claim 1, wherein the second part is generated by:
generating, by the model, first source code content corresponding to a target step;
providing, in response to an execution error of the first source code content in the operating environment, indication information of the execution error of the first source code content to the model; and
re-generating, by the model, second source code corresponding to the target step, wherein the second part comprises the first source code content and the second source code content.

3. The method (200) of claim 1, wherein the execution result is generated by:
obtaining streaming content generated by the model based on the processing request;
extracting, in response to detecting a predetermined code identifier from the streaming content, the source code content from the streaming content based on the code identifier; and
executing the source code content in the pre-configured operating environment to obtain the execution result.

4. The method (200) of claim 3, further comprising:
saving contextual information of the model in response to the source code content being executed in the operating environment; and
updating the saved contextual information based on the execution result of the source code for use in a subsequent processing process of the model.

5. The method (200) of claim 1, wherein the execution result is provided to the model by:
providing the execution result and a predetermined result identifier to the model.

6. The method (200) of claim 1, wherein the model is trained by:
obtaining a first sample problem in a sample set;
providing the first sample problem to a first model to determine whether solving the first sample problem requires generation of source code content; and
adding, in response to an output result of the first model indicating that solving the first sample problem requires the generation of the source code content, the first sample problem to first sample data; and
performing a first training process on the model based on the first sample data.

7. The method (200) of claim 6, wherein adding the sample problem to the first sample data comprises:
obtaining, in response to the output result of the first model indicating that solving the first sample problem requires the generation of the source code content, first response content generated by a second model based on the first sample problem, the first response content comprising a code segment; and
adding the first sample problem to the first sample data in response to the first response content satisfying a predetermined condition; and/or
wherein a training loss of the first training process is independent of an execution result of the code segment.

8. The method (200) of claim 7, wherein the predetermined condition comprises at least one of:
a code format of the code segment satisfying a predetermined specification;
the code segment successfully running in the operating environment;
an answer comprised in the first response content being consistent with an answer indicated by the first sample data.

9. The method (200) of claim 1, wherein the model is trained by:
performing a second training process on the model based on second sample data, the second training process being associated with reinforcement learning; and/or
wherein the plurality of steps are a plurality of forward reasoning steps for solving the problem.

10. The method (200) of claim 9, wherein performing the second training process on the model based on the second sample data comprises:
providing a second sample problem in the second sample data to the model to generate second response content, the second response content comprising a first answer to the second sample problem; and
determining reward information of the reinforcement learning based on a comparison between the first answer and a second answer indicated by the second sample data, to perform the second training process.

11. The method (200) of claim 10, wherein the reward information is also associated with whether a code segment comprised in the second response content successfully runs in the operating environment.

12. An apparatus (400) for information processing, comprising:
a receiving module (410) configured to receive a processing request, the processing request indicating a problem to be solved; and
a providing module (420) configured to provide response content generated by a model based on the processing request, the response content comprising an output answer to the problem and a plurality of parts corresponding to a plurality of steps of solving the problem, wherein the plurality of parts comprise at least a first part corresponding to natural language content and a second part corresponding to source code content, and the output answer is generated based on an execution result of the source code content in a pre-configured operating environment.

13. An electronic device (500), comprising:
at least one processing unit (510); and
at least one memory (520), the at least one memory (520) being coupled to the at least one processing unit (510) and storing instructions executable by the at least one processing unit (510), the instructions, when executed by the at least one processing unit, causing the electronic device to perform the method of any of claims 1 to 13.

14. A computer-readable storage medium having a computer program stored thereon, the computer program, when executed by a processor, implementing the method of any of claims 1 to 13.

15. A computer program product comprising computer-executable instructions which, when executed by a processor, implement the method of any of claims 1 to 13.
